# EUROPEAN PATENT SPECIFICATION

(11) **EP 4 424 144 B1**
(45) Date of publication and mention of the grant of the patent: **01.10.2025**
(21) Application number: 24161235.7
(22) Date of filing: 04.03.2024
(51) Int. Cl.: A01F 15/08

(54) **A BALER AND A METHOD FOR CONTROLLING THE DENSITY TO WHICH A BALE IS FORMED IN A BALER**
BALLENPRESSE UND VERFAHREN ZUR STEUERUNG DER DICHTE, MIT DER EIN BALLEN IN EINER BALLENPRESSE GEFORMT WIRD
PRESSE À BALLES ET PROCÉDÉ DE RÉGULATION DE LA DENSITÉ À LAQUELLE UNE BALLE EST FORMÉE DANS UNE PRESSE À BALLES

(30) Priority: 03.03.2023 IE S20230046
(43) Date of publication of application: 04.09.2024
(73) Proprietor: McHale Engineering Unlimited Company, Ballinrobe, County Mayo (IE)
(72) Inventor: McHale, Padraic, Christopher, Tumeenane, Clonbur, County Galway,, (IE); McHale, Martin, William, Kilmaine Village, Kilmaine, County Mayo, (IE); McHale, Paul, Gerard, 13 Riverside, Woodquay, Galway,, (IE); Biggins, John, Patrick, 30 Hillcrest, Claremorris, County Mayo, (IE); Warren, John, Alexander, Coolylaughnan, Hollymount, County Mayo, (IE); Shanahan, Conor, Paul, Claggan, Ballycroy, Westport, County Mayo, (IE); Heaney, James, John, Ballyglass, Scardaune, Claremorris, County Mayo, (IE)
(74) Representative: Gorman, Francis Fergus

(56) References cited:
- CN-U- 203 040 228
- DE-A1- 10 011 158
- DE-A1- 102020 205 115
- DE-A1- 19 751 985
- US-A- 5 622 104

## Description

The present invention relates to a baler, and in particular, to a baler for forming a cylindrical bale of material, and the invention also relates to a method for controlling the density to which a cylindrical bale is formed in a baler.

Balers for producing cylindrical bales are well known, for example, cylindrical bales of crop material, such as silage, hay, straw and the like. Such cylindrical bales are generally referred to as round bales and in general, are of diameter in the range of 500mm to 2,000mm, and of axial length in the range of 1,100mm to 1,300mm, and more commonly are of diameter in the range of 700mm to 1,300mm and of axial length in the range of 1,200mm to 1,250mm. Such balers may be belt balers or roller balers, and the baler defines a bale chamber in which the material is rotated, pressed and formed into a bale. The bale chamber in roller balers is formed by a plurality of circumferentially arranged bale rotating rollers which define the circumferential periphery of a bale chamber. Alternatively, the bale chamber may be formed by a combination of bale rotating rollers and one or more belts whereby the combination of the bale rotating rollers and the belt or belts define the circumferential periphery of the bale chamber. The bale rotating rollers are driven in rotation for rotating the material in the bale to form the bale into a round bale.

In general, such roller balers comprise two parts, namely, a first fixed part, part of or all of which is fixedly secured to a chassis of the baler, the bale rotating rollers of which define approximately 180° of the circumferential periphery of the bale chamber, and a second moveable part moveable relative to the fixed part. The bale rotating rollers of the moveable part define the other approximately 180° of the circumferential periphery of the bale chamber.

The moveable part, typically, is pivotally coupled to the first part, and is pivotal from a bale forming state, namely, a closed state defining with the fixed part the bale chamber, and an open state or a discharge state for accommodating discharge of a bale from the bale chamber. The moveable part of the baler is operable between the closed state and the open state by a pair of double-acting hydraulic rams, which are located on respective opposite sides of the baler, and are coupled between the fixed part and the moveable part.

The hydraulic rams, as well as operating the moveable second part of the baler between the closed state and the open state, also apply pressure to the moveable part when the moveable part is in the closed state, in order to resist the radial outward force applied by the rotating bale in the bale chamber to the moveable part as the formation of the bale is approaching completion. The pressure applied by the rams to the moveable part of the baler while the moveable part is in the closed state controls the density to which the bale is formed. The greater the pressure applied by the hydraulic rams to the moveable part of the baler, the greater will be the density of the formed bale, in other words, the more dense the bale will be.

Various systems are provided for enabling the density to which a bale is to be formed in the bale chamber to be selectable. However, in less automated balers, while the density to which the bale is to be formed is selectable, selection of the density of the bale requires manually setting a manually operated hydraulic pressure control valve located in the baler. The manually operated hydraulic pressure control valve allows the pressure of the hydraulic fluid applied to the hydraulic rams for urging the moveable part into the closed state to be selected. By appropriately selecting the hydraulic pressure applied to the rams, the density to which the bale is to be formed is selected. The problem with such balers is that should it be necessary to alter the density to which bales are being formed during a crop baling session, it is necessary for the driver who is driving a tractor that is towing and powering the baler to dismount the tractor and manually reset the hydraulic pressure control valve of the baler. This is undesirable, since it is time consuming and inconvenient for the tractor driver.

There is therefore a need for a baler which addresses this problem, and which allows the density to which a bale is to be formed to be controlled remotely of the baler, and preferably, from the driving cab of a towing vehicle towing and powering the baler. There is also a need for a method for controlling the density to which a bale is to be formed by a baler remotely, and preferably, from the driving cab of the tractor.

The present invention is directed towards providing such a baler, and the invention is also directed towards a method for remotely controlling the density to which a bale is to be formed in a baler.

A baler according to the preamble of claim 1 is known from DE 10 2020 205 115 A1.

According to the invention there is provided a baler for producing a round bale of material of a selectable density, the baler comprising a bale press, the bale press comprising a first part, and a second part operable in a bale forming state defining with the first part a bale chamber in which material is rotated, pressed and formed into a bale, at least one hydraulic ram acting between the first and second parts of the bale press, and a first hydraulic circuit adapted for connecting to a pressurised hydraulic fluid source for applying hydraulic fluid from a high pressure side of the pressurised hydraulic fluid source to the at least one hydraulic ram at a supply pressure for operating the second part of the bale press into the bale forming state to apply a pressing force to the material in the bale chamber to press the bale therein, wherein, a pressure reducing circuit is coupled to the first hydraulic circuit through a primary valve, the primary valve being selectively and alternately operable in a closed state for isolating the first hydraulic circuit from the pressure reducing circuit, and an open state connecting the first hydraulic circuit to the pressure reducing circuit to accommodate hydraulic fluid from the first hydraulic circuit to the pressure reducing circuit for reducing the pressure in the first hydraulic circuit to a selected hydraulic pressure of a plurality of selectable hydraulic pressures for producing the bale to a corresponding selectable bale density, the primary valve being operable from the closed state to the open state in response to the hydraulic pressure in the first hydraulic circuit being at the supply pressure, or exceeding the selected hydraulic pressure, and the first hydraulic circuit being isolated from the pressurised hydraulic fluid source, for reducing the hydraulic pressure in the first hydraulic circuit to the selected hydraulic pressure.

Preferably, the primary valve is operable from the open state to the closed state in response to the hydraulic pressure in the first hydraulic circuit being reduced to the selected hydraulic pressure.

In one embodiment of the invention the primary valve is operated from the closed state into the open state in response to a predefined closed time period having elapsed from the time the hydraulic pressure in the first hydraulic circuit reached the supply pressure or exceeded the selected hydraulic pressure.

In another embodiment of the invention the predefined closed time period lies in the range of 1 second to 10 seconds, and preferably, the predefined closed time period lies in the range of 3 seconds to 7 seconds, and advantageously, the predefined closed time period lies in the range of 4 seconds to 6 seconds, and ideally, the predefined closed time period is approximately 5 seconds.

In one embodiment of the invention the primary valve is operable from the closed state to the open state in response to a signal indicative of hydraulic fluid being returned through the first hydraulic circuit from the at least one hydraulic ram to a low pressure side of the pressurised hydraulic fluid source for returning hydraulic fluid from the pressure reducing circuit to the first hydraulic circuit.

In one embodiment of the invention the signal indicative of hydraulic fluid being returned through the first hydraulic circuit from the at least one hydraulic ram to the low pressure side of the pressurised hydraulic fluid source comprises a signal indicative of the second part of the bale press being urged by the at least one hydraulic ram from the bale forming state to an open state.

In an alternative embodiment of the invention the signal indicative of the hydraulic fluid being returned through the first hydraulic circuit from the at least one hydraulic ram to the low pressure side of the pressurised hydraulic fluid source comprises a signal indicative of the pressure in the first hydraulic circuit being indicative of hydraulic fluid being returned through the first hydraulic circuit from the at least one hydraulic ram to the low pressure side of the pressurised hydraulic fluid source.

In another embodiment of the invention the primary valve is operable from the open state to the closed state in response to a predefined open time period having elapsed from the time of the primary valve being operated into the open state thereof or the commencement of supply of hydraulic fluid to the first hydraulic circuit from the high pressure side of the pressurised hydraulic fluid source.

In one embodiment of the invention the predefined open time period lies in the range of 1 second to 5 seconds, and preferably, the predefined open time period lies in the range of 2 seconds to 4 seconds, and advantageously, the predefined open time period is approximately 3 seconds.

In one embodiment of the invention the pressure reducing circuit is connected to the first hydraulic circuit through a flow restricting valve, the flow restricting valve being configured to accommodate hydraulic fluid at a restricted flow rate from the first hydraulic circuit to the pressure reducing circuit, and preferably, the flow restricting valve is configured to accommodate hydraulic fluid at a substantially unrestricted flow rate from the pressure reducing circuit to the first hydraulic circuit.

In one embodiment of the invention the flow restricting valve is configured to restrict the flow rate of the hydraulic fluid from the first hydraulic circuit to the pressure reducing circuit to a substantially constant flow rate, and preferably, to a substantially constant flow rate irrespective of the pressure difference between the pressure in the first hydraulic circuit and the pressure in the pressure reducing circuit.

In one embodiment of the invention the restricted flow rate lies in the range of 0.5 litres per minute to 5 litres per minute, and preferably, the restricted flow rate lies in the range of 1 litre per minute to 3 litres per minute, and advantageously, the restricted flow rate is approximately 2 litres per minute.

In one embodiment of the invention the flow restricting valve comprises a pressure compensated flow restricting valve.

In one embodiment of the invention the pressure reducing circuit comprises a primary hydraulic fluid accumulator for accumulating hydraulic fluid from the first hydraulic circuit.

In an alternative embodiment of the invention the pressure reducing circuit comprises a low pressure return circuit for accommodating hydraulic fluid from the first hydraulic circuit to the low pressure side of the pressurised hydraulic fluid source.

In one embodiment of the invention the primary valve is operable under the control of a signal processor, the signal processor being configured to receive a remotely transmitted signal from a remotely located interface means indicative of a selected one of the selectable hydraulic pressures to which the pressure in the first hydraulic circuit is to be reduced, and the signal processor is responsive to the remotely transmitted signal for controlling the operation of the primary valve.

In another embodiment of the invention the signal processor is configured to read a signal from a monitoring means indicative of the second part of the bale press being in the bale forming state and/or to read a signal from a pressure sensor indicative of the hydraulic pressure in the first hydraulic circuit, and to control the operation of the primary valve in response to the signal read from the monitoring means and/or the signal read from the pressure sensor.

Preferably, the signal processor is configured to operate the primary valve from the closed state to the open state in response to the predefined closed time period having elapsed from the signal read from the monitoring means being indicative of the second part of the bale press being in the bale forming state.

In one embodiment of the invention the pressure sensor is located in the first hydraulic circuit.

In one embodiment of the invention the monitoring means comprises a sensor for monitoring displacement of the second part of the bale press from the bale forming state, and preferably, the sensor for monitoring the displacement of the second part of the bale press from the bale forming state is configured for monitoring the angular displacement of the second part from the bale forming state thereof.

Preferably, the monitoring means comprises a distance sensor for monitoring distance of the second part of the bale press from the bale forming state thereof.

In another embodiment of the invention the primary valve comprises an electrically controlled valve, and preferably, a solenoid operated valve, and advantageously, the primary valve is operated under the control of the signal processor, and preferably, the primary valve is operable from the closed state to the open state under the control of the signal processor, and preferably, the primary valve is operable from the open state to the closed state under the control of the signal processor.

In another embodiment of the invention the signal processor is responsive to the signal indicative of the flow of hydraulic fluid through the first hydraulic circuit from the at least one hydraulic ram to the low pressure side of the pressurised hydraulic fluid source for operating the primary valve from the closed state to the open state to accommodate hydraulic fluid from the pressure reducing circuit to the first hydraulic circuit.

In one embodiment of the invention the signal processor is responsive to a pressure drop in the first hydraulic circuit, or to the signal from the monitoring means being indicative of the second part of the bale press being urged to an open state thereof or being in an open state thereof for operating the primary valve from the closed state to the open state for accommodating hydraulic fluid from the pressure reducing circuit to the first hydraulic circuit.

In another embodiment of the invention the signal processor is responsive to the pressure in the first hydraulic circuit commencing to increase for operating the primary valve from the open state to the closed state.

In another embodiment of the invention the signal processor is configured to maintain the primary valve in the open state to continue to accommodate hydraulic fluid from the first hydraulic circuit to the pressure reducing circuit until the signal read from the pressure sensor is indicative of the pressure in the first hydraulic circuit having fallen to the selected hydraulic pressure, and advantageously, the signal processor is configured to operate the primary valve from the open state to the closed state to isolate the first hydraulic circuit from the pressure reducing circuit in response to the signal read from the pressure sensor being indicative of the pressure in the first hydraulic circuit having fallen to the selected hydraulic pressure.

In another embodiment of the invention the signal processor is responsive to completion of forming of the bale for operating the primary valve from the closed state to the open state for returning hydraulic fluid from the pressure reducing circuit to the first hydraulic circuit.

In another embodiment of the invention the interface means is adapted for locating in a driver's cab of a towing vehicle towing the baler.

In one embodiment of the invention the interface means is adapted for locating in the cab of a tractor adapted for towing and operating the bale press.

In a further embodiment of the invention the interface means is hardwired to the signal processor, or may communicate wirelessly with the signal processor.

In another embodiment of the invention the signal processor is located in the baler.

In an alternative embodiment of the invention the signal processor is located in the interface means.

In another embodiment of the invention the signal processor comprises a microcontroller of the baler which controls the operation of the baler, and preferably, the interface means comprises a part of the baler.

In one embodiment of the invention the pressurised hydraulic fluid source is remotely located of the baler, and preferably, the pressurised hydraulic fluid source is located in the towing vehicle towing and powering the baler, and advantageously, the pressurised hydraulic fluid source is located in a hydraulic system of the towing vehicle.

In another embodiment of the invention the first hydraulic circuit is adapted for connecting to the pressurised hydraulic fluid source through a remotely located main hydraulic valve, and preferably, the main hydraulic valve comprises a three-state main hydraulic valve, the main valve being operable in a first state connecting the first hydraulic circuit to the high pressure side of the pressurised hydraulic fluid source, a second state connecting the first hydraulic circuit to the low pressure side of the pressurised hydraulic fluid source, and a third state isolating the first hydraulic circuit from the pressurised hydraulic fluid source.

Advantageously, the main hydraulic valve comprises a spool valve, and preferably, a three-state spool valve.

In one embodiment of the invention the remotely located main valve is located in the towing vehicle towing the baler, and preferably, the main valve is located in the hydraulic system of the towing vehicle.

In another embodiment of the invention the at least one hydraulic ram comprises a double-acting hydraulic ram.

In one embodiment of the invention a second hydraulic circuit is provided, the second hydraulic circuit being adapted for connecting to the pressurised hydraulic fluid source for applying hydraulic fluid from the high pressure side of the pressurised hydraulic fluid source to the at least one hydraulic ram for operating the second part of the bale press from the bale forming state to an open state for accommodating discharge of a formed bale from the bale chamber.

In another embodiment of the invention the second hydraulic circuit is connected to the pressurised hydraulic fluid source through the main valve with the second hydraulic circuit connected to the main valve, so that when the main valve is in the first state the second hydraulic circuit is connected to the low pressure side of the pressurised hydraulic fluid source for returning hydraulic fluid from the at least one ram to the low pressure side of the pressurised hydraulic fluid source, and when the main valve is in the second state the second hydraulic circuit is connected to the high pressure side of the pressurised hydraulic fluid source for urging the second part of the bale press from the bale forming state to the open state, and when the main valve is in the third state the second hydraulic circuit is isolated from the pressurised hydraulic fluid source.

In one embodiment of the invention a pilot operated check valve is located in the first hydraulic circuit for maintaining the pressure in the first hydraulic circuit at the selected hydraulic pressure.

In one embodiment of the invention the pilot operated check valve in the first hydraulic circuit is responsive to the pressure in the second hydraulic circuit for opening the pilot operated check valve for returning hydraulic fluid from the first hydraulic circuit to the low pressure side of the pressurised hydraulic fluid source, and preferably, the pilot operated check valve in the first hydraulic circuit is responsive to an increase in the pressure in the second hydraulic circuit indicative of the main valve being operated into the second state for opening the pilot operated check valve to return hydraulic fluid from the first hydraulic circuit to the low pressure side of the pressurised hydraulic fluid source. Preferably, the pilot operated check valve in the first hydraulic circuit is responsive to the pressure in the second hydraulic circuit rising to a predefined trip pressure relative to the pressure in the first hydraulic circuit between the pilot operated check valve and the at least one ram for opening the pilot operated check valve. Preferably, the predefined trip pressure in the second hydraulic circuit is less than 50% of the pressure in the first hydraulic circuit between the pilot operated check valve and the at least one ram, and advantageously, is less than 40% of the pressure in the first hydraulic circuit, and ideally, the predefined trip pressure in the second hydraulic circuit for opening the pilot operated check valve to return hydraulic fluid through the first hydraulic circuit from the at least one hydraulic ram to the low pressure side of the pressurised hydraulic fluid source is approximately 25% of the pressure in the first hydraulic circuit between the pilot operated check valve and the at least one ram. Although, in some embodiments of the invention the predefined trip pressure to operate the pilot operated check valve may be 20% and may be as low as 10% of the pressure in the first hydraulic circuit between the pilot operated check valve and the at least one ram.

Preferably, the pressure reducing circuit is connected into the first hydraulic circuit between the pilot operated check valve and the at least one ram.

In one embodiment of the invention the signal processor is configured to output a first signal to the interface means to indicate that the main valve should be operated from the first state to the third state thereof in response to the second part of the bale press being in the bale forming state, and the pressure in the first hydraulic circuit being at the supply pressure or exceeding the selected hydraulic pressure.

In another embodiment of the invention the signal processor is configured to output a second signal to the interface means to indicate completion of formation of the bale in the bale chamber and to indicate that the main valve should be operated to the second state to urge the second part of the bale press from the bale forming state to the open state in response to completion of the formation of the bale in the bale chamber.

In one embodiment of the invention the baler comprises a roller baler comprising the first and second parts of the bale press, and preferably, the first and second parts comprise a plurality of bale rotating rollers circumferentially arranged to define the circumferential periphery of the bale chamber.

Preferably, the bale rotating rollers of the first part of the roller baler define approximately 180° of the circumferential periphery of the bale chamber, and the bale rotating rollers of the second part of the roller baler define the remaining approximately 180° of the circumferential periphery of the bale chamber.

In another embodiment of the invention at least a part of the first part of the roller baler comprises a fixed part which is fixedly secured to a chassis of the baler, and preferably, the second part of the roller baler is pivotally coupled to the first part thereof and advantageously, the second part is pivotally coupled to the second part about an upper pivot axis, and advantageously, the second part of the roller baler depends downwardly from the upper pivot axis.

In one embodiment of the invention the second part of the roller baler is pivotal about the upper pivot axis from the bale forming state, namely, a closed state defining with the first part the bale chamber to an open state for accommodating discharge of a formed bale from the bale chamber.

Preferably, the second part of the roller baler is pivotal rearwardly upwardly about the upper pivot axis from the closed state to the open state.

In one embodiment of the invention the monitoring means is provided for determining when the second part of the roller baler is in the bale forming state and for determining displacement of the second part of the roller baler from the bale forming state, and is configured to produce signals indicative of the displacement of the second part of the roller baler relative to the first part.

In another embodiment of the invention the signal processor is configured to read a signal from the monitoring means and to determine from the signal therefrom when the second part of the roller baler is in the bale forming state, and when the displacement of the second part of the roller baler from the first part thereof is indicative of completion of the forming of the bale in the bale chamber.

In another embodiment of the invention two hydraulic rams are provided for urging the second part of the bale press into the bale forming state, and advantageously, the hydraulic rams are located on respective opposite sides of the bale press.

Additionally, the invention provides a method for controlling the density to which a round bale of material is formed in a bale press, the bale press comprising a first part, and a second part operable in a bale forming state defining with the first part a bale chamber in which the material is rotated, pressed and formed into the round bale, at least one hydraulic ram acting between the first and second parts of the bale press, and a first hydraulic circuit adapted for connecting to a high pressure side of a pressurised hydraulic fluid source for applying hydraulic fluid to the at least one hydraulic ram at a supply pressure for urging the second part of the bale press into the bale forming state to apply a pressing force to the material in the bale chamber to press the bale therein, wherein the method comprises coupling a pressure reducing circuit to the first hydraulic circuit through a primary valve, operating the primary valve in an open state to connect the pressure reducing circuit to the first hydraulic circuit to accommodate hydraulic fluid from the first hydraulic circuit to the pressure reducing circuit to reduce the hydraulic pressure in the first hydraulic circuit to a selected hydraulic pressure of a plurality of selectable hydraulic pressures to produce the bale to a corresponding selectable bale density in response to the pressure in the first hydraulic circuit being at the supply pressure or exceeding the selected hydraulic pressure and the first hydraulic circuit being isolated from the pressurised hydraulic fluid source.

Preferably, the primary valve is operated into a closed state to isolate the first hydraulic circuit from the pressure reducing circuit in response to the hydraulic pressure in the first hydraulic circuit being reduced to the selected hydraulic pressure for producing the bale to the selected bale density.

In one embodiment of the invention the primary valve is operated in the open state to return hydraulic fluid from the pressure reducing circuit to the first hydraulic circuit in response to a signal indicative of hydraulic fluid being returned through the first hydraulic circuit from the at least one hydraulic ram to a low pressure side of the pressurised hydraulic fluid source, and preferably, the primary valve is operated into the closed state to isolate the first hydraulic circuit from the pressure reducing circuit in response to a predefined open time period having elapsed from the time of the primary valve being operated into the open state or the commencement of supply of hydraulic fluid to the at least one hydraulic ram through the first hydraulic circuit.

In another embodiment of the invention the primary valve is responsive to a remotely transmitted signal indicative of the selected hydraulic pressure.

Preferably, the primary valve is operated in the open state to return the hydraulic fluid from the pressure reducing circuit to the first hydraulic circuit on completion of formation of the bale in the bale chamber.

The invention also provides a combination of a baler according to the invention and a towing vehicle, the towing vehicle comprising the pressurised hydraulic fluid source and the main hydraulic valve. Preferably, the baler is powered by the towing vehicle, and advantageously, the first hydraulic circuit of the baler is connected to the pressurised hydraulic fluid source in the towing vehicle through the main hydraulic valve thereof. Advantageously, the second hydraulic circuit of the baler is connected to the pressurised hydraulic fluid source of the towing vehicle through the main hydraulic valve thereof.

In one embodiment of the invention the towing vehicle comprises a tractor comprising a driver's cab, and preferably, the interface means is located in the driver's cab of the tractor.

The advantages of the invention are many. A particularly important advantage of the invention is that the density to which the bales are to be formed may be controlled remotely of the baler, and in particular, from a driver's cab of a towing vehicle, for example, from the driver's cab of a tractor. Thus, there is no longer a need for a driver of a tractor towing the baler to dismount the tractor each time the density to which the bales are to be formed is to be changed. A further advantage of the invention is that the pressure reducing circuit which controls the hydraulic pressure of the hydraulic fluid urging the second part of the baler into the closed state is a relatively simple and inexpensive circuit and avoids the need for relatively expensive proportional release valves and associated control circuitry which is required for controlling the operation of such proportional release valves, which would otherwise be required for providing a baler with the facility whereby the density to which the bale is formed by the baler is selectable. Furthermore, the pressure reducing circuit is particularly suitable for including in relatively low cost balers at little extra cost in order to enable the density to which bales are to be formed in the bale chamber to be selected remotely.

The invention will be more clearly understood from the following description of a preferred embodiment thereof which is given by way of example only with reference to the accompanying drawings, in which:
Fig. 1 is a perspective view of a baler according to the invention for producing round bales of crop material of a selectable bale density,
Fig. 2 is a perspective view of the baler of Fig. 1 with a portion of the baler in a different state to that of Fig. 1,
Fig. 3 is a cross-sectional side elevational view of the baler of Fig. 1 ,
Fig. 4 is a circuit diagram of a hydraulic control circuit also according to the invention of the baler of

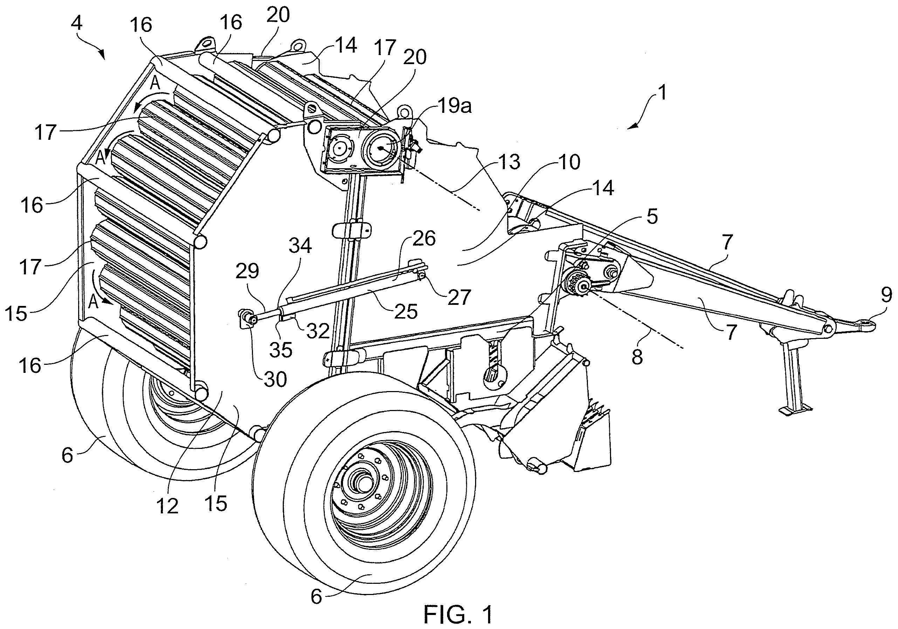

Fig. 1 for controlling the density to which a bale is to be formed by the baler of Fig. 1, and

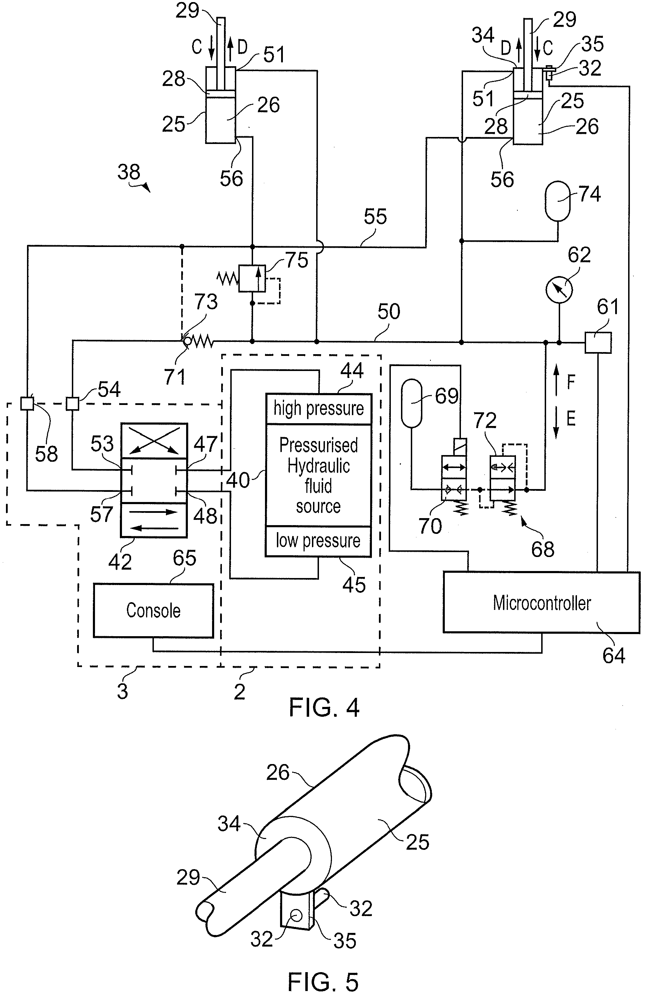

Fig. 5 is an enlarged perspective view of a detail of the baler of Fig. 1.

Referring to the drawings there is provided a baler according to the invention indicated generally by the reference numeral 1 for baling material into a round bale, and in this embodiment of the invention for baling crop material, for example, silage, hay, straw and the like into a round bale of diameter of approximately 1,300mm, and of axial length of approximately 1,200mm. The baler 1 is adapted to be towed and powered by any suitable towing vehicle, for example, a tractor. The tractor is illustrated in block representation in broken lines in Fig. 4 and is indicated by the reference numeral 2. The parts of the tractor 2 relevant to the invention are also illustrated in block representation in Fig. 4. In accordance with the invention the bale density to which the bales are formed by the baler 1 is selectable from a driver's cab 3 of the tractor 2 as will be described below.

The baler 1 comprises a bale press, also according to the invention, in this case, provided by a roller baler 4 mounted on a chassis 5 of the baler 1. The chassis 5 is carried on a pair of rotatably mounted ground engaging wheels 6. A pair of forwardly extending converging tow bars 7 are pivotally connected to the chassis 5 about a substantially horizontal forward pivot axis at 8 extending transversely of the normal forward direction of travel of the baler 1. The tow bars 7 terminate in a coupler 9 for coupling the baler 1 to the tractor 2 for towing the baler 1 along an elongated windrow of crop material lying in a field for baling thereof.

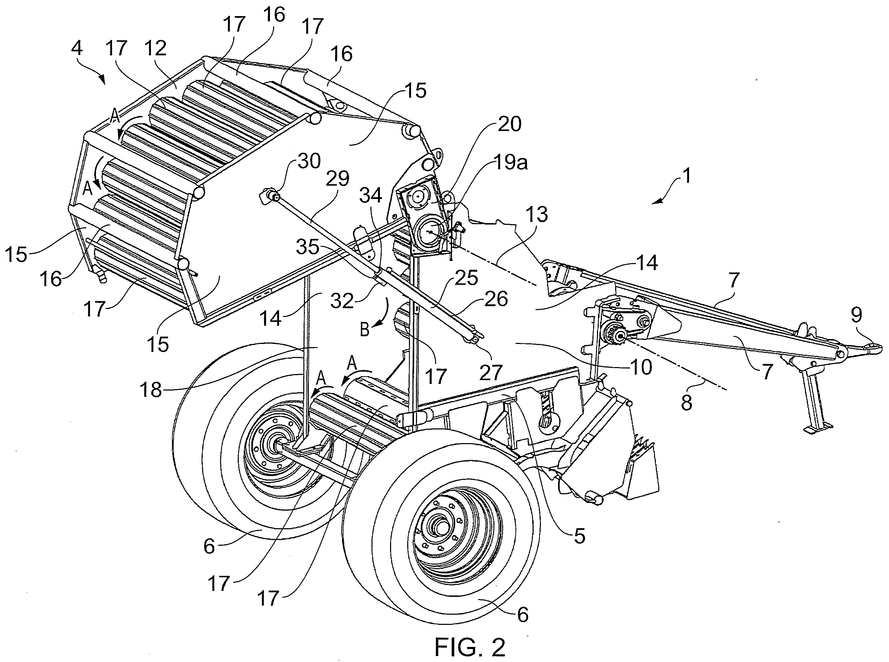

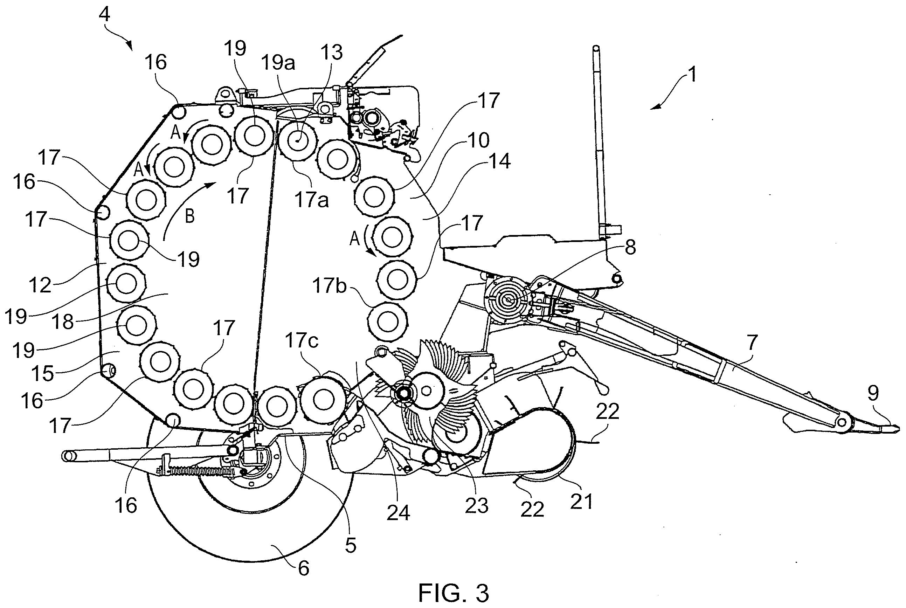

The roller baler 4 comprises a first part, in this embodiment of the invention a fixed part 10 fixedly secured to the chassis 5, and a second part, in this embodiment of the invention a rear door 12 which is pivotally coupled to the fixed part 10 about a substantially horizontal upper pivot axis 13 extending substantially parallel to the forward pivot axis 8. The rear door 12 is pivotal about the upper pivot axis 13 from a bale forming state, namely, a closed state, illustrated in Figs. 1 and 3, cooperating with the fixed part 10 to form with the fixed part 10 a bale chamber 18, within which crop material is rotated, pressed and formed into a bale to an open state illustrated in Fig. 2 with the rear door 12 pivoted rearwardly upwardly from the fixed part 10 for accommodating discharge of a formed bale from the bale chamber 18.

The fixed part 10 comprises a pair of spaced apart first end walls 14 which are rigidly secured to the chassis 5. The rear door 12 comprises a pair of spaced apart second end walls 15 joined by and held spaced apart by a plurality of connecting rods 16 extending between the second end walls 15. A plurality of bale rotating rollers 17 extend between the first end walls 14 of the fixed part 10 and the second end walls 15 of the rear door 12 and are circumferentially arranged to define the circumferential periphery of the bale chamber 18 when the rear door 12 is in the closed state. The bale rotating rollers 17 of the fixed part 10 define approximately 180° of the circumferential periphery of the bale chamber 18, and the bale rotating rollers 17 of the rear door 12 also define approximately 180° of the circumferential periphery of the bale chamber 18. The bale rotating rollers 17 are mounted fast on respective shafts 19 rotatably mounted in bearings (not shown) in the first and second end walls 14 and 15 of the fixed part 10 and the rear door 12, respectively.

The bale rotating rollers 17 are driven in rotation in the direction of the arrows A by a chain and sprocket drive (not shown) for rotating the crop material in the bale chamber 18 in the direction of the arrow B when the rear door 12 is in the closed state. The chain and sprocket drive (not shown) is driven by power supplied by a power take-off shaft (not shown) of the tractor 2. Sprockets (also not shown) of the chain and sprocket drive are mounted fast on the shafts 19 of the bale rotating rollers 17 extending through a corresponding one of the first end walls 14 and a corresponding one of the second end walls 15. A chain (not shown) of the chain and sprocket drive, drives the sprockets for rotating the bale rotating rollers 17 in the direction of the arrow A, for in turn rotating the crop material in the bale chamber 18 in the direction of the arrow B, see Figs. 2 and 3. Such a chain and sprocket drive for rotating bale rotating rollers of a roller baler and for rotating a bale in a bale chamber of a roller baler will be well known to those skilled in the art, and further description should not be required.

One of the shafts 19, namely, the shaft 19a of the uppermost bale rotating roller 17a of the fixed part 10, defines the upper pivot axis 13 about which the rear door 12 is pivotally coupled to the fixed part 10. A pair of pivot mounting brackets 20 extending from the second end walls 15 of the rear door 12 pivotally engage the shaft 19a for pivoting the rear door 12 about the upper pivot axis 13.

A pick-up means, in this embodiment of the invention comprising a pick-up drum 21 having a plurality of circumferentially and longitudinally spaced apart tines 22 radially extending therefrom is provided for picking up crop material from an windrow thereof on the ground, and delivering the crop material to a chopping rotor 23. The chopping rotor 23 delivers the crop material into the bale chamber 18 between a pair of the bale rotating rollers 17, namely, the bale rotating rollers 17b and 17c, which are spaced apart to define an inlet 24 to the bale chamber 18. As will be understood by those skilled in the art, the chopping rotor 23 may be operated in conjunction with cooperating chopping blades (not shown), which are selectively urgeable into engagement with the chopping rotor 23 for chopping the crop material as it is being delivered by the rotor 23 into the bale chamber 18, as will be understood by those skilled in the art.

At least one double-acting hydraulic ram, in this embodiment of the invention a pair of double-acting hydraulic rams 25 are provided on opposite sides of the roller baler 4. The rams 25 are operable as will be described below for pivoting the rear door 12 about the upper pivot axis 13 between the closed state and the open state, and also for applying pressure to the rear door 12 for maintaining the rear door 12 in the closed state during formation of a bale in the bale chamber 18, as will be understood by those skilled in the art. Each ram 25 comprises a cylinder 26 pivotally coupled to the corresponding first end wall 14 of the fixed part 10 by a first pivot mounting 27, and a piston rod 29 extending from a piston 28 within the cylinder 26 and pivotally coupled to the corresponding second end wall 15 of the rear door 12 by a second pivot mounting 30.

A monitoring means for monitoring the angular displacement of the rear door 12 about the upper pivot axis 13 from the closed state thereof comprises a distance sensor 32 mounted adjacent a distal end 34 of the cylinder 26 of one of the rams 25, see in particular Fig. 5. The distance sensor 32 is carried on a carrier bracket 35 secured to the cylinder 26 adjacent the distal end 34 thereof for monitoring the distance of the corresponding second pivot mounting 30 from the distance sensor 32. The angular displacement of the rear door 12 about the upper pivot axis 13 from the closed state thereof is proportional to the distance of the second pivot mounting 30 of the corresponding piston rod 29 from the distance sensor 32. Accordingly, the distance sensor 32 produces an electronic signal indicative of the angular displacement of the rear door 12 about the upper pivot axis 13 from the closed state thereof. In this embodiment of the invention the distance sensor 32 is configured to monitor the angular displacement of the rear door 12 from the closed state thereof up to an angular displacement of approximately 35° from the closed state.

By monitoring the displacement of the rear door 12 from the closed state, completion of the formation of a bale in the bale chamber 18 is determined. As will be understood by those skilled in the art, as the formation of a bale in the bale chamber 18 is nearing completion the bale exerts a radial outward force on the rear door 12. As the radial outward force begins to exceed the pressure applied by the rear door 12 to the bale in the bale chamber 18, the rear door 12 begins to be displaced from the closed state thereof. Completion of the formation of the bale is determined when the rear door 12 has been displaced through a predefined angular displacement about the upper pivot axis 13 from the closed state. The predefined angular displacement may lie in the range of 0.5° to 5 but more typically, would lie in the range of 1° to 3°, and generally, the predefined angular displacement of the rear door from the closed state would be towards the lower end of the range of 1° to 3°.

A hydraulic control circuit 38 of the baler 1 for controlling the operation of the rams 25 for operating the rear door 12 between the open and the closed states is adapted for coupling to a pressurised hydraulic fluid source 40 located in the hydraulic system of the tractor 2 through a three-state main hydraulic valve 42 also located in the hydraulic system of the tractor 2 and operable in a first state, a second state and a third state as will be described below. The pressurised hydraulic fluid source 40 of the tractor comprises a high pressure side 44 and a low pressure side 45. Pressurised hydraulic fluid is supplied from the high pressure side 44 of the pressurised hydraulic fluid source 40 to the control circuit 38 at a supply pressure, which in this case is at the hydraulic system pressure of the tractor 2. Hydraulic fluid is returned from the control circuit 38 to the low pressure side 45 of the pressurised hydraulic fluid source 40. The hydraulic system pressure of the tractor 2 would typically lie in the range of 190 bar to 230 bar.

The main valve 42 of the tractor 2 comprises a manually operated three state spool valve, although, in some tractors, the three state spool valve may comprise a solenoid operated three state spool valve which would be operated under the control of the tractor control system by a three position joystick operated electrical switch located on a control panel of the tractor 2. The tractor driver operates the main valve 42 for operating the rear door 12 between the closed and open states thereof as will be described below. The main valve 42 comprises a first port 47 coupled to the high pressure side 44 of the pressurised hydraulic fluid source 40, and a second port 48 coupled to the low pressure side 45 of the pressurised hydraulic fluid source 40.

The hydraulic control circuit 38 of the baler 1 comprises a first hydraulic circuit 50 connected to first ports 51 of the rams 25, and adapted for releasably coupling to a third port 53 of the main valve 42 of the tractor 2 through a first releasable hydraulic coupler 54. A second hydraulic circuit 55 of the hydraulic control circuit 38 is connected to second ports 56 of the rams 25 and is adapted for releasably coupling to a fourth port 57 of the main valve 42 through a second releasable hydraulic coupler 58.

In the first state of the main valve 42, the first hydraulic circuit 50 is connected to the high pressure side 44 of the pressurised hydraulic fluid source 40, and the second hydraulic circuit 55 is connected to the low pressure side 45 of the pressurised hydraulic fluid source 40. Thus in the first state of the main valve 42, pressurised hydraulic fluid from the high pressure side 44 of the pressurised hydraulic fluid source 40 at the tractor hydraulic system pressure is applied to the first ports 51 of the rams 25 through the first hydraulic circuit 50, and hydraulic fluid is returned through the second ports 56 of the rams 25 to the low pressure side 45 of the pressurised hydraulic fluid source 40 through the second hydraulic circuit 55 for retracting the piston rods 29 into the cylinders 26 of the rams 25 in the direction of the arrows C, see Fig. 4, for in turn operating the rear door 12 from the open state to the closed state thereof, and for maintaining the rear door 12 in the closed state thereof against the radial outward pressure of the bale in the bale chamber 18 as the formation of the bale is nearing completion.

In the second state of the main valve 42, the second hydraulic circuit 55 is connected to the high pressure side 44 of the pressurised hydraulic fluid source 40 for applying pressurised hydraulic fluid at the tractor hydraulic system pressure to the second ports 56 of the rams 25, and the first hydraulic circuit 50 is connected to the low pressure side 45 of the pressurised hydraulic fluid source 40 for returning hydraulic fluid through the first ports 51 of the rams 25 to the low pressure side 45 of the pressurised hydraulic fluid source 40. With the main valve 42 in the second state thereof, the piston rods 29 are extended from the cylinders 26 of the rams 25 in the direction of the arrows D, see Fig. 4, for in turn urging the rear door 12 from the closed state to the open state.

In the third state of the main valve 42, which is a neutral state thereof, the first and second hydraulic circuits 50 and 55 are isolated from the pressurised hydraulic fluid source 40, so that when the first hydraulic circuit 50 or the second hydraulic circuit 55 is pressurised with the hydraulic fluid, the rear door 12 is retained in the closed state or the open state as the case may be.

A pressure sensor 61 in the first hydraulic circuit 50 monitors the pressure in the first hydraulic circuit 50 and produces an electronic signal indicative of the hydraulic pressure in the first hydraulic circuit 50. A pressure gauge 62 provides a visual indication of the pressure in the first hydraulic circuit 50.

A signal processor, in this embodiment of the invention a microcontroller 64, which in this case comprises the microcontroller of the baler 1 for controlling the operation of the baler 1 reads the signal produced by the pressure sensor 61 indicative of the pressure in the first hydraulic circuit 50, and reads the signal produced by the distance sensor 32 indicative of the angular displacement of the rear door 12 about the upper pivot axis 13 from the closed state thereof. An interface means, which in this embodiment of the invention comprises a control console 65 is hardwire connected to the microcontroller 64 and provides two-way communication with the microcontroller 64. The control console 65 is located in the cab 3 of the tractor 2, so that the tractor driver can input signals to the microcontroller 64 relating to the operation of the baler 1, and data relevant to the operation of the baler 1 is displayed by the microcontroller 64 on the control console 65. The control console 65 also comprises a sounder for producing audible signals alerting the tractor driver to actions required to be taken by the tractor driver regarding, for example, the operation of the main valve 42.

A pressure reducing circuit 68 connected to the first hydraulic circuit 50 is operable under the control of the microcontroller 64 for reducing the pressure in the first hydraulic circuit 50 from the pressure at which the hydraulic fluid is supplied to the first hydraulic circuit 50, namely, from the tractor hydraulic system pressure to any one of a plurality of selectable hydraulic pressures, for in turn producing bales of respective corresponding selectable bale densities. In this embodiment of the invention the microcontroller 64 is configured to operate the pressure reducing circuit 68 to provide ten selectable hydraulic pressures ranging from a maximum selectable pressure of 180 bar down to a minimum selectable pressure of 90 bar in incremental steps of 10 bar each. The higher the pressure of the hydraulic fluid applied to the rams 25 through the first hydraulic circuit 50, the higher will be the density of the formed bale, as will be well understood by those skilled in the art.

The pressure reducing circuit 68 comprises a primary hydraulic accumulator 69 for accumulating hydraulic fluid from the first hydraulic circuit 50, and a primary valve 70 selectively and alternately operable in an open state communicating the first hydraulic circuit 50 with the pressure reducing circuit 68, and a closed state isolating the first hydraulic circuit 50 from the pressure reducing circuit 68. In this embodiment of the invention the primary hydraulic accumulator 69 comprises a diaphragm hydraulic accumulator, and the primary valve 70 comprises a solenoid operated valve, which defaults to the closed state. The primary valve 70 is operable from the closed state to the open state under the control of the microcontroller 64 in response to the signal read from the distance sensor 32 being indicative of the rear door 12 being in the closed state, and the signal read from the pressure sensor 61 being indicative of the pressure in the first hydraulic circuit 50 exceeding the selected hydraulic pressure or reaching the tractor hydraulic system pressure after the first hydraulic circuit 50 has isolated from the pressurised hydraulic fluid source 40 by the main valve 42 being in the third state, for accommodating hydraulic fluid from the first hydraulic circuit 50 into the primary accumulator 69 in a first direction, namely, in the direction of the arrow E for reducing the pressure in the first hydraulic circuit 50 to the selected hydraulic pressure. The primary valve 70 is operable under the control of the microcontroller 64 from the open state to the closed state in response to the signal read from the pressure sensor 61 being indicative of the hydraulic pressure in the first hydraulic circuit 50 being reduced to the selected hydraulic pressure for maintaining the pressure in the first hydraulic circuit 50 at the selected hydraulic pressure.

The primary valve 70 is also operable under the control of the microcontroller 64 from the closed state to the open state to return hydraulic fluid from the primary accumulator 69 in a second direction, namely, in the direction of the arrow F to the low pressure side 45 of the pressurised hydraulic fluid source 40 through the first hydraulic circuit 50 in response to the signal from the distance sensor 32 being indicative of the rear door 12 being operated from the closed state to the open state by the rams 25. Simultaneously with operating the primary valve 70 from the closed state to the open state, the microcontroller 64 is configured to commence timing a predefined open time period, during which the primary valve 70 is maintained by the microcontroller 64 in the open state for returning hydraulic fluid from the primary accumulator 69 to the low pressure side of the pressurised hydraulic power supply 40. The microcontroller 64 is responsive to the predefined open time period having timed out for operating the primary valve 70 from the open state to the closed state. In this embodiment of the invention the predefined open time period is approximately 3 seconds, although, in some embodiments of the invention the predefined open time period may lie in the range of 1 second to 5 seconds, but preferably, would lie in the range of 2 seconds to 4 seconds.

A pressure compensated flow restricting valve 72 is located in the pressure reducing circuit 68, and in this embodiment of the invention the pressure compensated flow restricting valve 72 is located between the primary valve 70 and the first hydraulic circuit 50. The pressure compensated flow restricting valve 72 is configured to restrict the flow of hydraulic fluid in the first direction of the arrow E from the first hydraulic circuit 50 to the pressure reducing circuit 68, and to permit unrestricted flow in the second direction of the arrow F from the pressure reducing circuit 68 to the first hydraulic circuit 50. In this embodiment of the invention the pressure compensated flow restricting valve 72 is configured to restrict and maintain the flow rate of the hydraulic fluid in the first direction into the pressure reducing circuit 68 at a constant restricted flow rate of approximately 2 litres per minute, in order to reduce the rate at which the pressure is falling in the first hydraulic circuit 50. By reducing the rate at which the pressure is falling in the first hydraulic circuit 50, the falling pressure in the first hydraulic circuit 50 may be accurately monitored by the microcontroller 64 from the signal read from the pressure sensor 61. Additionally, by reducing the rate at which the pressure is falling in the first hydraulic circuit 50, when the pressure in the first hydraulic circuit 50 has been reduced to the selected hydraulic pressure, the primary valve 70 may be operated into the closed state while the pressure in the first hydraulic circuit 50 is at the selected hydraulic pressure. While in this embodiment of the invention the pressure compensated flow restricting valve 72 is described as being configured to restrict and maintain the flow rate in the first direction into the pressure reducing circuit 68 at a constant restricted flow rate of approximately 2 litres per minute, it is envisaged that in some embodiments of the invention the constant restricted flow rate may range from 0.5 litres per minute to 5 litres per minute, although preferably, it is envisaged that the constant restricted flow rate may lie in the range of 1 litre per minute to 3 litres per minute.

When the primary valve 70 is operated in the open state to return the hydraulic fluid from the pressure reducing circuit 68 to the first hydraulic circuit 50 in the second direction of the arrow F, the hydraulic fluid is returned to the first hydraulic circuit 50 at an unrestricted free flow rate.

A pilot operated check valve 71 is located in the first hydraulic circuit 50 between the connection of the pressure reducing circuit 68 into the first hydraulic circuit 50 and the main valve 42. The pilot operated check valve 71 is configured for preventing flow of hydraulic fluid through the first hydraulic circuit 50 from the rams 25 and from the pressure reducing circuit 68 to the low pressure side 45 of the pressurised hydraulic fluid source 40, when the main valve 42 is in the third state, for maintaining the pressure in the first hydraulic circuit 50, and in turn in the rams 25 at the selected hydraulic pressure while the rams are urging the rear door 12 into the closed state. A pilot port 73 of the pilot operated check valve 71 is connected to the second hydraulic circuit 55. While the hydraulic pressure in the second hydraulic circuit 55 remains at or below a predefined trip pressure, in this case a pressure of 25% of the hydraulic pressure in the first hydraulic circuit 50 between the pilot operated check valve 71 and the rams 25, the pilot operated check valve 71 is maintained in the closed state, thereby preventing hydraulic fluid to flow in the first hydraulic circuit 50 in a direction from the rams 25 to the pressurised hydraulic fluid source 40. When the hydraulic pressure in the second hydraulic circuit 55 exceeds 25% of the hydraulic pressure in the first hydraulic circuit 50 between the pilot operated check valve 71 and the rams 25, the pilot operated check valve 71 is operated in the open state to permit flow of hydraulic fluid through the first hydraulic circuit 50 from the rams 25 to the low pressure side 45 of the pressurised hydraulic fluid source 40 when the main valve 42 is in the second state thereof. Accordingly, when the main valve 42 is operated into the second state thereof for operating the rear door 12 from the closed state to the open state thereof, the pilot operated check valve 71 is operated from the closed state into the open state in response to the hydraulic pressure in the second hydraulic circuit 55 exceeding approximately 25% of the hydraulic pressure in the first hydraulic circuit 50 between the pilot operated check valve 71 and the rams 25 for permitting return of hydraulic fluid through the first hydraulic circuit 50 from the first ports 51 of the rams 25 to the low pressure side 45 of the pressurised hydraulic fluid source 40.

Thus, for example, if the selected hydraulic pressure is approximately 180 bar, and the hydraulic pressure in the first hydraulic circuit 50 between the pilot operated check valve 71 and the rams 25 is at 180 bar, the pilot operated check valve 71 is operated into the open state in response to the hydraulic pressure in the second hydraulic circuit 55 reaching approximately 45 bar for returning hydraulic fluid through the first hydraulic circuit 50 from the rams 25 and the pressure reducing circuit 68 to the low pressure side 45 of the pressurised hydraulic fluid source 40.

The pilot operated check valve 71 remains in the closed state for preventing hydraulic fluid flowing through the first hydraulic circuit 50 in the direction from the rams 25 to the low pressure side 45 of the pressurised hydraulic fluid source 40 for so long as the hydraulic pressure in the second hydraulic circuit 55 remains at or below the predefined trip pressure of 25% of the hydraulic pressure in the first hydraulic circuit 50 between the pilot operated check valve 71 and the rams 25. While the predefined trip pressure has been described as being 25% of the hydraulic pressure in the first hydraulic circuit 50, it is envisaged that the predefined trip pressure may lie in the range of 10% to 50% of the hydraulic pressure in the first hydraulic circuit 50 between the pilot operated check valve 71 and the rams 25. Although, in general, it is envisaged that the predefined trip pressure would lie in the range of 20% to 30% of the hydraulic pressure in the first hydraulic circuit between the pilot operated check valve 71 and the rams 25.

A main hydraulic fluid accumulator 74 is connected to the first hydraulic circuit 50 for buffering the pressurised hydraulic fluid in the first hydraulic circuit 50 at the selected hydraulic pressure, and for maintaining the pressure in the first hydraulic circuit 50 as close as possible to the selected hydraulic pressure as the rear door 12 is being urged from the closed state by the radial outward pressure exerted on the rear door 12 by the rotating bale in the bale chamber 18 as the formation of the bale is nearing completion.

A pressure responsive safety valve 75 connected between the first hydraulic circuit 50 and the second hydraulic circuit 55 is responsive to the pressure in the first hydraulic circuit 50 exceeding a predefined safe pressure, particularly, when the pressure in the first hydraulic circuit 50 is rising as a result of the rear door 12 being urged from the closed state by the radial outward force being exerted on the rear door 12 by the rotating bale in the bale chamber 18 as the bale is nearing completion. In this embodiment of the invention the pressure responsive safety valve 75 is set to operate from the closed state into the open state in response to the pressure in the first hydraulic circuit 50 exceeding a predefined safe pressure of 240 bar. However, it is envisaged that in some embodiments of the invention that the pressure responsive safety valve 75 may be set to operate from the closed state into the open state in response to the pressure in the first hydraulic circuit 50 reaching a predefined safe pressure lying in the range of 200 bar to 250 bar.

In order to assist in an understanding of the pressure reducing circuit 68 and its operation, the operation of the baler 1 during the formation of a bale in the bale chamber 18 will now be described. The tractor driver enters the selected hydraulic pressure into the microcontroller 64 through the control console 65, which is located in the cab 3 of the tractor 2. The entered selected hydraulic pressure is stored in a suitable memory (not shown) in the microcontroller 64.

If the rear door 12 is in the open state, the tractor driver operates the main valve 42 into the first state for connecting the first hydraulic circuit 50 to the high pressure side 44 of the pressurised hydraulic fluid source 40, and for connecting the second hydraulic circuit 55 to the low pressure side 45 of the pressurised hydraulic fluid source 40 for in turn operating the rams 25 for urging the rear door 12 into the closed state. On the rear door 12 being in the closed state, the tractor driver operates the tractor to tow the baler 1 along an elongated windrow of crop material which is picked up by the pick-up drum 21 and delivered into the bale chamber 18.

When the rear door 12 is in the open state the primary valve 70 is also in the closed state, as will be described below, and remains in the closed state until operated by the microcontroller 64 into the open state.

The microcontroller 64 monitors the signal from the pressure sensor 61 and also monitors the signal from the distance sensor 32 while the rear door 12 is being urged from the open state to the closed state. On the signal from the distance sensor 32 being indicative of the rear door 12 being in the closed state, and the signal from the pressure sensor 61 being indicative of the pressure in the first hydraulic circuit 50 having reached the tractor hydraulic system pressure, the microcontroller 64 is configured to commence timing a predefined closed time period, during which the primary valve 70 is maintained in the closed state to allow sufficient time for the main valve 42 to automatically return from the first state to the third state to isolate the first and second hydraulic circuits 50 and 55 from the pressurised hydraulic fluid source 40, or to allow the tractor driver sufficient time to operate the main valve 42 from the first state into the third state on the rear door 12 being urged into the closed state. The predefined closed time period is approximately 5 seconds, although the predefined closed time period may be any suitable time period in the range of 1 second to 10 seconds, and preferably, is in the range of 3 seconds to 7 seconds.

On the predefined closed time period having timed out, the microcontroller 64 operates the primary valve 70 into the open state to accommodate hydraulic fluid from the first hydraulic circuit 50 to the primary accumulator 69 of the pressure reducing circuit 68 at the constant restricted flow rate of 2 litres per minute, to in turn reduce the hydraulic pressure in the first hydraulic circuit 50 to the selected hydraulic pressure. On the signal read by the microcontroller 64 from the pressure sensor 61 being indicative of the hydraulic pressure in the first hydraulic circuit 50 having fallen to the selected hydraulic pressure, the microcontroller 64 operates the primary valve 70 from the open state to the closed state to maintain the hydraulic pressure in the first hydraulic circuit 50, and in turn in the rams 25 at the selected hydraulic pressure.

Alternatively, on the signal from the distance sensor 32 being indicative of the rear door 12 being in the closed state, and the signal from the pressure sensor 61 being indicative of the pressure in the first hydraulic circuit 50 exceeding the selected hydraulic pressure or having reached the tractor hydraulic system pressure, the microcontroller 64 outputs a first signal to the control console 65 in the driver's cab 3 of the tractor 2. In response to the first signal the control console 65 produces an audible first alert signal alerting the driver to the fact that the rear door 12 is in the closed state, and the main valve 42 should be operated from the first state to the third state.

Simultaneously with outputting the first signal to the control console 65, the microcontroller 64 commences to time the predefined closed time period of approximately 5 seconds to allow the tractor driver sufficient time to operate the main valve 42 from the first state to the third state. On the predefined closed time period having timed out, the microcontroller 64 operates the primary valve 70 from the closed state to the open state to accommodate hydraulic fluid from the first hydraulic circuit 50 into the primary accumulator 69 of the pressure reducing circuit 68 as already described. The microcontroller 64 maintains the primary valve 70 in the open state until the signal read from the pressure sensor 61 is indicative of the pressure in the first hydraulic circuit 50 having fallen to the selected hydraulic pressure as already described, at which stage, the microcontroller 64 operates the primary valve 70 into the closed state.

The microcontroller 64 maintains the primary valve 70 in the closed state during formation of the bale in the bale chamber 18. With the primary valve 70 in the closed state and the pilot operated check valve 71 in the closed state, the pressure in the first hydraulic circuit 50 and in the rams 25 is maintained at the selected hydraulic pressure during formation of the bale in the bale chamber 18.

During formation of the bale in the bale chamber, the microcontroller 64 monitors the signal from the distance sensor 32 in order to determine when the formation of the bale in the bale chamber 18 is complete. On the rear door 12 having been displaced through the relevant predefined angular displacement in the range typically of 1° to 3° about the upper pivot axis 13 from the closed state, the microcontroller 64 deems the formation of the bale to be complete. The microcontroller 64 then outputs a second signal to the control console 65 which produces an audible second alert signal to the tractor driver instructing the tractor driver to bring the tractor 2 and the baler 1 to a halt, to allow circumferential wrapping of the bale in the bale chamber 18 to commence, as will be understood by those skilled in the art. The microcontroller 64 then operates a dispenser for dispensing net wrapping material or plastic sheet film wrapping material into the bale chamber 18 for circumferentially wrapping the bale in the bale chamber 18.

On the completion of circumferential wrapping of the bale in the bale chamber 18, the microcontroller 64 transmits a third signal to the control console 65 which produces a third audible alert signal alerting the tractor driver to the completion of the formation and circumferential wrapping of the bale in the bale chamber 18. The tractor driver then operates the main valve 42 from the third state to the second state to thereby connect the first hydraulic circuit 50 to the low pressure side 45 of the pressurised hydraulic fluid source 40, and to connect the second hydraulic circuit 55 to the high pressure side 44 of the pressurised hydraulic fluid source 40, to thereby operate the rams 25 for urging the rear door 12 from the closed state to the open state for accommodating discharge of the bale from the bale chamber 18.

On the hydraulic pressure in the second hydraulic circuit 55 exceeding the predefined trip pressure of approximately 25% of the hydraulic pressure in the first hydraulic circuit 50 between the pilot operated check valve 71 and the rams 25, the pilot operated check valve 71 operates into the open state, thereby allowing hydraulic fluid to flow from the rams 25 through the first hydraulic circuit 50 to the low pressure side 45 of the pressurised hydraulic fluid source 40. The pressurised hydraulic fluid from the high pressure side 44 of the pressurised hydraulic fluid source 40 continues to flow through the second hydraulic circuit 55 to the second ports 56 of the rams 25 for operating the rear door 12 from the closed state to the open state for discharge of the bale therefrom.

The microcontroller 64 reads the signal from the distance sensor 32, and on the signal being indicative of the rear door 12 being operated from the closed state to the open state thereof, the microcontroller 64 operates the primary valve 70 from the closed state to the open state to return the hydraulic fluid in the primary accumulator 69 to the first hydraulic circuit 50 and in turn to the low pressure side 45 of the pressurised hydraulic fluid source 40. On the microcontroller 64 operating the primary valve 70 from the closed state to the open state to return the hydraulic fluid to the first hydraulic circuit 50, the microcontroller 64 commences to time the predefined open time period of approximately 3 seconds in order to allow sufficient time for the hydraulic fluid to be returned from the primary accumulator 69 to the first hydraulic circuit 50, and in turn to the low pressure side 45 of the pressurised hydraulic fluid source 40. On the predefined open time period having timed out, the microcontroller 64 operates the primary valve 70 from the open state to the closed state.

On the bale having been discharged from the bale chamber 18, the tractor driver operates the main valve 42 from the second state or the third state, as the case may be, to the first state, and the formation of the next bale in the bale chamber 18 commences and continues as already described.

In use, with the baler 1 hitched to the tractor 2 and connected to the power take-off shaft of the tractor for providing mechanical drive to the baler as will be understood by those skilled in the art, and with the first and second hydraulic circuits 50 and 55 releasably connected through the first and second hydraulic couplers 54 and 58 to the third and fourth ports 53 and 57, respectively, of the main valve 42 of the tractor 2, the baler 1 is ready for use. The tractor driver as already described, enters the selected hydraulic pressure into the microcontroller 64 through the console 65 at which the hydraulic pressure in the first hydraulic circuit 50 is to be maintained during the formation of the bale in the bale chamber in order to produce the bales to the corresponding bale density. If the rear door 12 is in the open state, the tractor driver operates the main valve 42 from the second state or the third state, depending on the state in which the main valve 42 is, to the first state to operate the rear door 12 from the open state to the closed state, and so operation of the baler 1 continues as already described.

While the pressure reducing circuit has been described as comprising a primary hydraulic accumulator, it is envisaged that in some embodiments of the invention the pressure reducing circuit instead of being provided with a hydraulic fluid accumulator may be provided as a circuit which would be connected to the low pressure side of the pressurised hydraulic fluid source, and which would be connected to the first hydraulic circuit through the primary valve. Thus, on operating the primary valve from the closed state to the open state when the hydraulic pressure in the first hydraulic circuit exceeds the selected hydraulic pressure or is at the tractor hydraulic system pressure, hydraulic fluid would be accommodated from the first hydraulic circuit directly to the low pressure side of the pressurised hydraulic fluid source in order to reduce the pressure in the first hydraulic circuit to the selected hydraulic pressure.

It is also envisaged that while the primary hydraulic fluid accumulator has been described as comprising a diaphragm hydraulic fluid accumulator, any suitable hydraulic fluid accumulator may be used, for example, a bladder hydraulic fluid accumulator, a piston hydraulic fluid accumulator, or indeed any other suitable hydraulic fluid accumulator.

It is also envisaged that in some embodiments of the invention the pilot operated check valve may be omitted, since the pressure in the first hydraulic circuit once reduced to the selected hydraulic pressure would be maintained at the selected hydraulic pressure by the main valve of the tractor being in the third state thereof, provided of course that the main valve of the tractor in the third state thereof fully isolates the first and second hydraulic circuits from the pressurised hydraulic fluid source, and in particular isolates the first hydraulic circuit from the high pressure side of the pressurised hydraulic fluid source.

Although the roller baler has been described as comprising a pair of double-acting hydraulic rams for operating the rear door between the closed state and the open state, in some embodiments of the invention it is envisaged that one double-acting hydraulic ram may be sufficient.

It is also envisaged that in some embodiments of the invention the one or more hydraulic rams for operating the rear door between the closed state and the open state and for maintaining the rear door in the closed state at the selected hydraulic pressure, instead of being provided by one or more double-acting hydraulic rams, may be provided by one or more single-acting hydraulic rams. In which case, the single-acting hydraulic rams would be configured with the piston rods thereof being retracted into the cylinders under the pressurised hydraulic fluid, and with the piston rods being extended from the cylinders thereof by a spring return.

While the primary valve has been described as comprising a solenoid operated valve, the primary valve may be any suitable type of valve, and instead of being solenoid operated, may be operated by a rotary electric motor. Further, it is envisaged that the primary valve may be operable between the open and closed states hydraulically by a suitable pressurised pilot hydraulic fluid supply. The pilot hydraulic fluid supply would be controlled by suitable valves by the microcontroller.

It will also be appreciated that the main valve in the tractor to which the first and second hydraulic circuits are releasably connected, may be any other suitable type of main valve, and may be manually operated, electrically operated or operated by a pilot supply of hydraulic fluid.

While the baler has been described as comprising a roller baler of a particular construction, it will be readily apparent to those skilled in the art that the baler, if it is provided as a roller baler, may be of any other suitable construction. Indeed, it is envisaged in some embodiments of the invention that the roller baler may comprise a three-part roller baler which would comprise a first fixed part, a second closure part and a third tipping part, each of which would carry a plurality of bale rotating rollers which would be arranged circumferentially to define the periphery of a bale chamber. Such a roller baler would be of the type disclosed in PCT Specification No. WO 02/076183. In such a three-part roller baler, the rams operating the second closure part, the bale rotating rollers of which define approximately 180° of the periphery of the bale chamber, would be operated by hydraulic fluid through the first and second hydraulic circuits connecting the rams operating the second closure part to the pressurised hydraulic fluid supply of the tractor, and the pressure reducing circuit would be connected to the first hydraulic circuit through the primary valve.

It is also envisaged that in some embodiments of the invention the baler may be provided as a belt baler, or as a baler comprising a combination of bale rotating rollers and one or more belts.

While the baler has been described as being configured to provide ten selectable hydraulic pressures to produce bales of ten corresponding bale densities, it is envisaged that the number of selectable hydraulic pressures may vary from two upwardly and may extend beyond ten selectable hydraulic pressures. It is also envisaged that the pressure at which the hydraulic fluid is supplied to the baler from the high pressure side of the pressurised hydraulic fluid source may be one of the selectable hydraulic pressures.

It will also be appreciated that while a pressure responsive safety valve has been described for preventing the hydraulic pressure in the first hydraulic circuit exceeding a predefined safety pressure, in some embodiments of the invention the pressure responsive safety valve may be omitted, or may be replaced by any other suitable valve.

Additionally, it will be appreciated that while it is advantageous to provide a main hydraulic fluid accumulator in the first hydraulic circuit for buffering the hydraulic fluid at the selected hydraulic pressure in order that the pressure in the first hydraulic circuit and in turn in the hydraulic rams is maintained as closely as possible at the selected hydraulic pressure as the rear door is being urged from the closed state by the radial outward force applied by the rotating bale in the bale chamber as the bale is nearing completion, in some embodiments of the invention it is envisaged that the main hydraulic fluid accumulator may be omitted.

While the baler has been described as producing round bales of a specific diameter and of a specific axial length, it will be readily apparent to those skilled in the art that the baler may be configured to produce round bales of any suitable diameter and any suitable axial length.

While the supply pressure at which the hydraulic fluid is supplied to the hydraulic control circuit of the baler has been described as being the hydraulic system pressure of the tractor, it is envisaged that in some embodiments of the invention the supply pressure at which the hydraulic fluid is supplied to the hydraulic control circuit of the baler may be different to that of the hydraulic system pressure of the tractor, and in such cases, it is envisaged that in general, the supply pressure at which the hydraulic fluid is supplied to the hydraulic control circuit of the baler would be stepped-down from the hydraulic system pressure of the tractor.

## Claims

1. A baler for producing a round bale of material of a selectable density, the baler comprising a bale press (4), the bale press (4) comprising a first part (10), and a second part (12) operable in a bale forming state defining with the first part a bale chamber (18) in which material is rotated, pressed and formed into a bale, at least one hydraulic ram (25) acting between the first and second parts (10,12) of the bale press (4), and a first hydraulic circuit (50) adapted for connecting to a pressurised hydraulic fluid source (40) for applying hydraulic fluid from a high pressure side (44) of the pressurised hydraulic fluid source (40) to the at least one hydraulic ram (25) at a supply pressure for operating the second part (12) of the bale press (4) into the bale forming state to apply a pressing force to the material in the bale chamber (18) to press the bale therein, **characterised in that**, a pressure reducing circuit (68) is coupled to the first hydraulic circuit (50) through a primary valve (70), the primary valve (70) being selectively and alternately operable in a closed state for isolating the first hydraulic circuit (50) from the pressure reducing circuit (68), and an open state connecting the first hydraulic circuit (50) to the pressure reducing circuit (68) to accommodate hydraulic fluid from the first hydraulic circuit (50) to the pressure reducing circuit (68) for reducing the pressure in the first hydraulic circuit (50) to a selected hydraulic pressure of a plurality of selectable hydraulic pressures for producing the bale to a corresponding selectable bale density, the primary valve (70) being operable from the closed state to the open state in response to the hydraulic pressure in the first hydraulic circuit (50) being at the supply pressure, or exceeding the selected hydraulic pressure, and the first hydraulic circuit (50) being isolated from the pressurised hydraulic fluid source (40), for reducing the hydraulic pressure in the first hydraulic circuit (50) to the selected hydraulic pressure.

2. A baler as claimed in Claim 1 **characterised in that** the primary valve (70) is operable from the open state to the closed state in response to the hydraulic pressure in the first hydraulic circuit (50) being reduced to the selected hydraulic pressure.

3. A baler as claimed in Claim 1 or 2 **characterised in that** the primary valve (70) is operable from the closed state to the open state in response to a signal indicative of hydraulic fluid being returned through the first hydraulic circuit (50) from the at least one hydraulic ram (25) to a low pressure side (45) of the pressurised hydraulic fluid source (40) for returning hydraulic fluid from the pressure reducing circuit (68) to the first hydraulic circuit (50).

4. A baler as claimed in any preceding claim **characterised in that** the pressure reducing circuit (68) is connected to the first hydraulic circuit (50) through a flow restricting valve (72), the flow restricting valve (72) being configured to accommodate hydraulic fluid at a restricted flow rate from the first hydraulic circuit (50) to the pressure reducing circuit (68) and to accommodate hydraulic fluid at a substantially unrestricted flow rate from the pressure reducing circuit (68) to the first hydraulic circuit (50).

5. A baler as claimed in any preceding claim **characterised in that** the primary valve (70) is operable under the control of a signal processor (64), the signal processor (64) being configured to receive a remotely transmitted signal from a remotely located interface means (65) indicative of a selected one of the selectable hydraulic pressures to which the pressure in the first hydraulic circuit (50) is to be reduced, and the signal processor (64) is responsive to the remotely transmitted signal for controlling the operation of the primary valve (70).

6. A baler as claimed in Claim 5 **characterised in that** the signal processor (64) is configured to read a signal from a monitoring means (32) indicative of the second part (12) of the bale press (4) being in the bale forming state and/or to read a signal from a pressure sensor (61) indicative of the hydraulic pressure in the first hydraulic circuit (50), and to control the operation of the primary valve (70) in response to the signal read from the monitoring means (32) and/or the signal read from the pressure sensor (61).

7. A baler as claimed in Claim 6 **characterised in that** the signal processor (64) is configured to operate the primary valve (70) from the closed state to the open state in response to a predefined closed time period having elapsed from the signal read from the monitoring means (32) being indicative of the second part (12) of the bale press (4) being in the bale forming state.

8. A baler as claimed in any preceding claim **characterised in that** a pilot operated check valve (71) is located in the first hydraulic circuit (50) for maintaining the pressure in the first hydraulic circuit (50) at the selected hydraulic pressure.

9. A baler as claimed in any preceding claim **characterised in that** the pressure reducing circuit (68) comprises a primary hydraulic fluid accumulator (69).

10. A baler as claimed in any preceding claim **characterised in that** the first hydraulic circuit (50) is adapted for connecting to the pressurised hydraulic fluid source (40) through a remotely located three-state main hydraulic valve (42), the main valve (42) being operable in a first state connecting the first hydraulic circuit (50) to the high pressure side (44) of the pressurised hydraulic fluid source (40), a second state connecting the first hydraulic circuit (50) to the low pressure side (45) of the pressurised hydraulic fluid source (40), and a third state isolating the first hydraulic circuit (50) from the pressurised hydraulic fluid source.

11. A baler as claimed in any preceding claim **characterised in that** a second hydraulic circuit (55) is provided, the second hydraulic circuit being adapted for connecting to the pressurised hydraulic fluid source (40) for applying hydraulic fluid from the high pressure side (44) of the pressurised hydraulic fluid source (40) to the at least one hydraulic ram (25) for operating the second part (12) of the bale press (4) from the bale forming state to an open state for accommodating discharge of a formed bale from the bale chamber (18).

12. A baler as claimed in Claim 11 **characterised in that** the second hydraulic circuit (55) is connected to the pressurised hydraulic fluid source (40) through the main valve (42) with the second hydraulic circuit (55) connected to the main valve (42), so that when the main valve (42) is in the first state the second hydraulic circuit (55) is connected to the low pressure side (45) of the pressurised hydraulic fluid source (40) for returning hydraulic fluid from the at least one ram (25) to the low pressure side (45) of the pressurised hydraulic fluid source (40), and when the main valve (42) is in the second state the second hydraulic circuit (55) is connected to the high pressure side (44) of the pressurised hydraulic fluid source (40) for urging the second part (12) of the bale press (4) from the bale forming state to the open state, and when the main valve (42) is in the third state the second hydraulic circuit (55) is isolated from the pressurised hydraulic fluid source (40).

13. A method for controlling the density to which a round bale of material is formed in a bale press (4), the bale press (4) comprising a first part (10), and a second part (12) operable in a bale forming state defining with the first part (10) a bale chamber (18) in which the material is rotated, pressed and formed into the round bale, at least one hydraulic ram (25) acting between the first and second parts (10,12) of the bale press (4), and a first hydraulic circuit (50) adapted for connecting to a high pressure side (44) of a pressurised hydraulic fluid source (40) for applying hydraulic fluid to the at least one hydraulic ram (25) at a supply pressure for urging the second part (12) of the bale press (4) into the bale forming state to apply a pressing force to the material in the bale chamber (18) to press the bale therein, **characterised in that** the method comprises coupling a pressure reducing circuit (68) to the first hydraulic circuit (50) through a primary valve (70), operating the primary valve (70) in an open state to connect the pressure reducing circuit (68) to the first hydraulic circuit (50) to accommodate hydraulic fluid from the first hydraulic circuit (50) to the pressure reducing circuit (68) to reduce the hydraulic pressure in the first hydraulic circuit (50) to a selected hydraulic pressure of a plurality of selectable hydraulic pressures to produce the bale to a corresponding selectable bale density in response to the pressure in the first hydraulic circuit (50) being at the supply pressure or exceeding the selected hydraulic pressure and the first hydraulic circuit (50) being isolated from the pressurised hydraulic fluid source (40).

14. A method as claimed in Claim 13 **characterised in that** the primary valve (70) is operated into a closed state to isolate the first hydraulic circuit (50) from the pressure reducing circuit (68) in response to the hydraulic pressure in the first hydraulic circuit (50) being reduced to the selected hydraulic pressure for producing the bale of the corresponding selected bale density.

15. A method as claimed in Claim 13 or 14 **characterised in that** the primary valve (70) is operated in the open state to return hydraulic fluid from the pressure reducing circuit (68) to the first hydraulic circuit (50) in response to a signal indicative of hydraulic fluid being returned through the first hydraulic circuit (50) from the at least one hydraulic ram (25) to a low pressure side (45) of the pressurised hydraulic fluid source (40).

## Patentansprüche

1. Ballenpresse zur Herstellung eines Rundballens aus Material mit einer wählbaren Dichte, wobei die Ballenpresse eine Ballenpresseinrichtung (4), wobei die Ballenpresseinrichtung (4) einen ersten Teil (10) und einen zweiten Teil (12) umfasst, der in einem Ballenformungszustand betreibbar ist und mit dem ersten Teil eine Ballenkammer (18) definiert, in der Material gedreht, gepresst und zu einem Ballen geformt wird, mindestens einen Hydraulikzylinder (25), der zwischen dem ersten und dem zweiten Teil (10, 12) der Ballenpresseinrichtung (4) wirkt, und einen ersten Hydraulikkreis (50) umfasst, der ausgelegt ist zur Verbindung einer druckbeaufschlagten Hydraulikfluidquelle (40), um Hydraulikfluid von einer Hochdruckseite (44) der druckbeaufschlagten Hydraulikfluidquelle (40) an den mindestens einen Hydraulikzylinder (25) mit einem Versorgungsdruck anzulegen, um den zweiten Teil (12) der Ballenpresseinrichtung (4) in den Ballenformungszustand zu schalten und so eine Presskraft auf das Material in der Ballenkammer (18) auszuüben und den Ballen darin zu pressen,
**dadurch gekennzeichnet, dass**
ein Druckminderkreis (68) über ein Primärventil (70) mit dem ersten Hydraulikkreis (50) gekoppelt ist, das Primärventil (70) wahlweise und abwechselnd in einem geschlossenen Zustand zum Trennen des ersten Hydraulikkreises (50) vom Druckminderkreis (68) und in einem offenen Zustand, um den ersten Hydraulikkreis (50) mit dem Druckminderkreis (68) zu verbinden und Hydraulikfluid vom ersten Hydraulikkreis (50) in den Druckminderkreis (68) zu leiten, zum Reduzieren des Drucks im ersten Hydraulikkreis (50) auf einen gewählten Hydraulikdruck aus einer Mehrzahl von wählbaren Hydraulikdrücken zum Pressen des Ballens mit einer entsprechenden wählbaren Ballendichte betreibbar ist, das Primärventil (70) vom geschlossenen Zustand in den offenen Zustand als Reaktion darauf schaltbar ist, dass der Hydraulikdruck im ersten Hydraulikkreis (50) den Versorgungsdruck erreicht oder den gewählten Hydraulikdruck überschreitet, und der erste Hydraulikkreis (50) von der druckbeaufschlagten Hydraulikfluidquelle (40) getrennt ist, um den Hydraulikdruck im ersten Hydraulikkreis (50) auf den gewählten Hydraulikdruck zu reduzieren.

2. Ballenpresse nach Anspruch 1, **dadurch gekennzeichnet, dass** das Primärventil (70) als Reaktion darauf, dass der Hydraulikdruck im ersten Hydraulikkreis (50) auf den gewählten Hydraulikdruck reduziert wird, vom offenen Zustand in den geschlossenen Zustand schaltbar ist.

3. Ballenpresse nach Anspruch 1 oder 2, **dadurch gekennzeichnet, dass** das Primärventil (70) als Reaktion auf ein Signal, das angibt, dass Hydraulikfluid durch den ersten Hydraulikkreis (50) von dem mindestens einen Hydraulikzylinder (25) zu einer Niederdruckseite (45) der druckbeaufschlagten Hydraulikfluidquelle (40) zurückgeführt wird, vom geschlossenen in den offenen Zustand schaltbar ist, um so Hydraulikfluid vom Druckminderkreis (68) zum ersten Hydraulikkreis (50) zurückzuführen.

4. Ballenpresse nach einem der vorhergehenden Ansprüche, **dadurch gekennzeichnet, dass** der Druckminderkreis (68) über ein Drosselventil (72) mit dem ersten Hydraulikkreis (50) verbunden ist, das Drosselventil (72) eingerichtet ist, um Hydraulikfluid mit einer gedrosselten Durchflussrate vom ersten Hydraulikkreis (50) zum Druckminderkreis (68) zu leiten und mit einer im Wesentlichen ungedrosselten Durchflussrate vom Druckminderkreis (68) zum ersten Hydraulikkreis (50) zu leiten.

5. Ballenpresse nach einem der vorhergehenden Ansprüche, **dadurch gekennzeichnet, dass** das Primärventil (70) unter der Steuerung eines Signalprozessors (64) betreibbar ist, der Signalprozessor (64) eingerichtet ist zum Empfangen eines fernübertragenen Signals von einer entfernt angeordneten Schnittstelleneinrichtung (65), die einen gewählten von den wählbaren Hydraulikdrücken angibt, auf den der Druck im ersten Hydraulikkreis (50) reduziert werden soll, und der Signalprozessor (64) auf das fernübertragene Signal zur Steuerung des Betriebs des Primärventils (70) reagiert.

6. Ballenpresse nach Anspruch 5, **dadurch gekennzeichnet, dass** der Signalprozessor (64) zum Lesen eines Signals einer Überwachungseinrichtung (32), das angibt, dass sich der zweite Teil (12) der Ballenpresseinrichtung (4) im Ballenformungszustand befindet, und/oder zum Lesen eines Signals von einem Drucksensor (61), das den Hydraulikdruck im ersten Hydraulikkreis (50) angibt, und zum Steuern des Betriebs des Primärventils (70) in Reaktion auf das von der Überwachungseinrichtung (32) gelesene Signal und/oder das vom Drucksensor (61) gelesene Signal eingerichtet ist.

7. Ballenpresse nach Anspruch 6, **dadurch gekennzeichnet, dass** der Signalprozessor (64) zum Betrieb des Primärventils (70) vom geschlossenen Zustand in den offenen Zustand als Reaktion darauf, dass eine vordefinierte Schließzeitdauer verstrichen ist, aus dem von der Überwachungseinrichtung (32) gelesenen Signal eingerichtet ist, das angibt, dass der zweite Teil (12) der Ballenpresseinrichtung (4) im Ballenformungszustand ist.

8. Ballenpresse nach einem der vorhergehenden Ansprüche, **dadurch gekennzeichnet, dass** ein entsperrbares Rückschlagventil (71) im ersten Hydraulikkreis (50) angeordnet ist, um den Druck im ersten Hydraulikkreis (50) auf dem gewählten Hydraulikdruck zu halten.

9. Ballenpresse nach einem der vorhergehenden Ansprüche, **dadurch gekennzeichnet, dass** der Druckminderkreis (68) einen primären Hydraulikfluidspeicher (69) umfasst.

10. Ballenpresse nach einem der vorhergehenden Ansprüche, **dadurch gekennzeichnet, dass** der erste Hydraulikkreis (50) ausgelegt ist zur Verbindung mit der druckbeaufschlagten Hydraulikfluidquelle (40) über ein entfernt angeordnetes Dreizustandshaupthydraulikventil (42), das Hauptventil (42) in einem ersten Zustand, der den ersten Hydraulikkreis (50) mit der Hochdruckseite (44) der druckbeaufschlagten Hydraulikfluidquelle (40) verbindet, in einem zweiten Zustand, der den ersten Hydraulikkreis (50) mit der Niederdruckseite (45) der druckbeaufschlagten Hydraulikfluidquelle (40) verbindet, und in einem dritten Zustand schaltbar ist, der den ersten Hydraulikkreis (50) von der druckbeaufschlagten Hydraulikfluidquelle trennt.

11. Ballenpresse nach einem der vorhergehenden Ansprüche, **dadurch gekennzeichnet, dass** ein zweiter Hydraulikkreis (55) vorgesehen ist, der zweite Hydraulikkreis zum Verbinden mit der druckbeaufschlagten Hydraulikfluidquelle (40) ausgelegt ist, um Hydraulikfluid von der Hochdruckseite (44) der druckbeaufschlagten Hydraulikfluidquelle (40) an den mindestens einen Hydraulikzylinder (25) anzulegen und so den zweiten Teil (12) der Ballenpresseinrichtung (4) vom Ballenformzustand in einen offenen Zustand zu schalten, um eine Entladung eines geformten Ballens aus der Ballenkammer (18) zu ermöglichen.

12. Ballenpresse nach Anspruch 11, **dadurch gekennzeichnet, dass** der zweite Hydraulikkreis (55) über das Hauptventil (42) mit der druckbeaufschlagten Hydraulikfluidquelle (40) verbunden ist, wobei der zweite Hydraulikkreis (55) mit dem Hauptventil (42) verbunden ist, so dass, wenn das Hauptventil (42) im ersten Zustand ist, der zweite Hydraulikkreis (55) mit der Niederdruckseite (45) der druckbeaufschlagten Hydraulikfluidquelle (40) verbunden ist, um Hydraulikfluid von dem mindestens einen Hydraulikzylinder (25) zur Niederdruckseite (45) der druckbeaufschlagten Hydraulikfluidquelle (40) zurückzuführen, und wenn das Hauptventil (42) im zweiten Zustand ist, der zweite Hydraulikkreis (55) mit der Hochdruckseite (44) der druckbeaufschlagten Hydraulikfluidquelle (40) verbunden ist, um den zweiten Teil (12) der Ballenpresseinrichtung (4) vom Ballenformzustand in den offenen Zustand zu drücken, und wenn das Hauptventil (42) im dritten Zustand ist, der zweite Hydraulikkreis (55) von der druckbeaufschlagten Hydraulikfluidquelle (40) getrennt ist.

13. Verfahren zum Steuern der Dichte, mit der ein Rundballen aus Material in einer Ballenpresseinrichtung (4) geformt wird, wobei die Ballenpresseinrichtung (4) einen ersten Teil (10) und einen zweiten Teil (12) umfasst, der in einem Ballenformungszustand betreibbar ist und mit dem ersten Teil eine Ballenkammer (18) definiert, in der Material gedreht, gepresst und zu einem Ballen geformt wird, mindestens einen Hydraulikzylinder (25), der zwischen dem ersten und dem zweiten Teil (10, 12) der Ballenpresseinrichtung (4) wirkt, und einen ersten Hydraulikkreis (50) umfasst, der ausgelegt ist zum Verbinden einer Hochdruckseite (44) einer druckbeaufschlagten Hydraulikfluidquelle (40), um Hydraulikfluid an den mindestens einen Hydraulikzylinder (25) mit einem Versorgungsdruck anzulegen, um den zweiten Teil (12) der Ballenpresseinrichtung (4) in den Ballenformungszustand zu drücken und so eine Presskraft auf das Material in der Ballenkammer (18) auszuüben und den Ballen darin zu pressen,
**dadurch gekennzeichnet, dass**
das Verfahren ein Koppeln eines Druckminderkreises (68) mit dem ersten Hydraulikkreis (50) über ein Primärventil (70), ein Betreiben des Primärventils (70) in einem offenen Zustand, um den Druckminderkreis (68) mit dem ersten Hydraulikkreis (50) zu verbinden und Hydraulikfluid aus dem ersten Hydraulikkreis (50) in den Druckminderkreis (68) zu leiten, um den Hydraulikdruck in dem ersten Hydraulikkreis (50) auf einen gewählten Hydraulikdruck einer Mehrzahl wählbarer Hydraulikdrücke zu reduzieren, um den Ballen mit einer entsprechenden wählbaren Ballendichte als Reaktion darauf herzustellen, dass der Druck im ersten Hydraulikkreis (50) den Versorgungsdruck erreicht oder den gewählten Hydraulikdruck überschreitet, und der erste Hydraulikkreis (50) von der druckbeaufschlagten Hydraulikfluidquelle (40) getrennt ist.

14. Verfahren nach Anspruch 13, **dadurch gekennzeichnet, dass** das Primärventil (70) in einen geschlossenen Zustand betrieben wird, um den ersten Hydraulikkreis (50) vom Druckminderkreis (68) als Reaktion darauf zu trennen, dass der Hydraulikdruck im ersten Hydraulikkreis (50) auf den gewählten Hydraulikdruck zur Herstellung des Ballens mit der entsprechenden gewählten Ballendichte reduziert wird.

15. Verfahren nach Anspruch 13 oder 14, **dadurch gekennzeichnet, dass** das Primärventil (70) im offenen Zustand betreibbar ist, um Hydraulikfluid vom Druckminderkreis (68) zum ersten Hydraulikkreis (50) als Reaktion auf ein Signal zurückzuführen, das angibt, dass ein Hydraulikfluid durch den ersten Hydraulikkreis (50) von dem mindestens einen Hydraulikzylinder (25) zu einer Niederdruckseite (45) der druckbeaufschlagten Hydraulikfluidquelle (40) zurückgeführt wird.

## Revendications

1. Presse-balle pour produire une balle ronde de matériau d'une densité sélectionnable, le presse-balle comprenant une presse à balles (4), la presse à balles (4) comprenant une première partie (10), et une seconde partie (12) pouvant fonctionner dans un état de formation de balle définissant avec la première partie une chambre de balle (18) dans laquelle du matériau est tourné, pressé et formé en une balle, au moins un vérin hydraulique (25) agissant entre les première et seconde parties (10,12) de la presse à balles (4), et un premier circuit hydraulique (50) adapté pour se connecter à une source de fluide hydraulique pressurisé (40) afin d'appliquer un fluide hydraulique à partir d'un côté haute pression (44) de la source de fluide hydraulique pressurisé (40) jusqu'au moins le vérin hydraulique (25) à une pression d'alimentation pour faire fonctionner la seconde partie (12) de la presse à balles (4) dans l'état de formation de balle afin d'appliquer une force de pression au matériau dans la chambre à balles (18) pour presser la balle à l'intérieur de cette dernière, **caractérisé en ce qu'**un circuit de réduction de pression (68) est couplé au premier circuit hydraulique (50) par l'intermédiaire d'une valve primaire (70), la valve primaire (70) pouvant fonctionner sélectivement et alternativement dans un état fermé pour isoler le premier circuit hydraulique (50) du circuit de réduction de pression (68), et dans un état ouvert reliant le premier circuit hydraulique (50) au circuit de réduction de pression (68) pour faire passer du fluide hydraulique du premier circuit hydraulique (50) jusqu'au circuit de réduction de pression (68) afin de réduire la pression dans le premier circuit hydraulique (50) à une pression hydraulique sélectionnée parmi une pluralité de pressions hydrauliques sélectionnables pour produire la balle à une densité de balle correspondante sélectionnable, la valve primaire (70) pouvant être actionnée de l'état fermé à l'état ouvert en réponse à la pression hydraulique dans le premier circuit hydraulique (50) étant à la pression d'alimentation, ou dépassant la pression hydraulique sélectionnée, et le premier circuit hydraulique (50) étant isolé de la source de fluide hydraulique pressurisé (40), pour réduire la pression hydraulique dans le premier circuit hydraulique (50) à la pression hydraulique sélectionnée.

2. Presse-balle selon la revendication 1, **caractérisé en ce que** la valve primaire (70) peut passer de l'état ouvert à l'état fermé en réponse à la réduction de la pression hydraulique dans le premier circuit hydraulique (50) à la pression hydraulique sélectionnée.

3. Presse-balle selon la revendication 1 ou 2, **caractérisé en ce que** la valve primaire (70) peut passer de l'état fermé à l'état ouvert en réponse à un signal indiquant que le fluide hydraulique est renvoyé à travers le premier circuit hydraulique (50) depuis l'au moins un vérin hydraulique (25) vers un côté basse pression (45) de la source de fluide hydraulique pressurisé (40) pour renvoyer le fluide hydraulique du circuit de réduction de la pression (68) vers le premier circuit hydraulique (50).

4. Presse-balle selon l'une quelconque des revendications précédentes, **caractérisé en ce que** le circuit de réduction de pression (68) est connecté au premier circuit hydraulique (50) à travers une valve restrictive de débit (72), la valve restrictive de débit (72) étant configurée pour recevoir du fluide hydraulique à un débit restreint du premier circuit hydraulique (50) jusqu'au circuit de réduction de pression (68) et pour recevoir du fluide hydraulique à un débit substantiellement libre du circuit de réduction de pression (68) jusqu'au premier circuit hydraulique (50).

5. Presse-balle selon l'une quelconque des revendications précédentes, **caractérisé en ce que** la valve primaire (70) peut fonctionner sous le contrôle d'un processeur de signaux (64), le processeur de signaux (64) étant configuré pour recevoir un signal transmis à distance d'un moyen d'interface situé à distance (65) indiquant une pression hydraulique sélectionnée parmi les pression hydrauliques sélectionnables auxquelles la pression dans le premier circuit hydraulique (50) doit être réduite, et le processeur de signaux (64) réagit au signal transmis à distance pour contrôler le fonctionnement de la valve primaire (70).

6. Presse-balle selon la revendication 5, **caractérisé en ce que** le processeur de signaux (64) est configuré pour lire un signal provenant d'un moyen de surveillance (32) indiquant que la seconde partie (12) de la presse à balles (4) est dans l'état de formation de balle et/ou pour lire un signal provenant d'un capteur de pression (61) indiquant la pression hydraulique dans le premier circuit hydraulique (50), et pour commander le fonctionnement de la valve primaire (70) en réponse au signal lu par le moyen de surveillance (32) et/ou au signal lu par le capteur de pression (61).

7. Presse-balle selon la revendication 6, **caractérisé en ce que** le processeur de signaux (64) est configuré pour faire fonctionner la valve primaire (70) de l'état fermé à l'état ouvert en réponse à une période de temps fermée prédéfinie s'étant écoulée à partir du signal lu à partir du moyen de surveillance (32) indiquant que la seconde partie (12) de la presse à balles (4) est dans l'état de formation de balle.

8. Presse-balle selon l'une quelconque des revendications précédentes, **caractérisé en ce qu'**un clapet anti-retour piloté (71) est situé dans le premier circuit hydraulique (50) pour maintenir la pression dans le premier circuit hydraulique (50) à la pression hydraulique sélectionnée.

9. Presse-balle selon l'une quelconque des revendications précédentes, **caractérisé en ce que** le circuit de réduction de pression (68) comprend un accumulateur de fluide hydraulique primaire (69).

10. Presse-balle selon l'une quelconque des revendications précédentes, **caractérisé en ce que** le premier circuit hydraulique (50) est adapté pour se connecter à la source de fluide hydraulique pressurisé (40) par l'intermédiaire d'une valve hydraulique principale à trois états (42) située à distance, la vanne principale (42) pouvant fonctionner dans un premier état connectant le premier circuit hydraulique (50) au côté haute pression (44) de la source de fluide hydraulique pressurisé (40), un second état connectant le premier circuit hydraulique (50) au côté basse pression (44) de la source de fluide hydraulique pressurisé (40), et un troisième état isolant le premier circuit hydraulique (50) de la source de fluide hydraulique sous pression.

11. Presse-balle selon l'une quelconque des revendications précédentes, **caractérisé en ce qu'**un second circuit hydraulique (55) est fourni, le second circuit hydraulique étant adapté pour se connecter à la source de fluide hydraulique pressurisé (40) afin d'appliquer du fluide hydraulique du côté haute pression (44) de la source de fluide hydraulique pressurisé (40) jusqu'à au moins le vérin hydraulique (25) pour actionner la seconde partie (12) de la presse à balles (4) de l'état de formation de balle à un état ouvert pour permettre la décharge d'une balle formée à partir de la chambre de balle (18).

12. Presse-balle selon la revendication 11, **caractérisé en ce que** le second circuit hydraulique (55) est connecté à la source de fluide hydraulique pressurisé (40) par l'intermédiaire de la valve principale (42) avec le second circuit hydraulique (55) connecté à la valve principale (42), de sorte que lorsque la valve principale (42) est dans le premier état, le second circuit hydraulique (55) est connecté au côté basse pression (45) de la source de fluide hydraulique pressurisée (40) pour renvoyer le fluide hydraulique du au moins un vérin (25) vers le côté basse pression (45) de la source de fluide hydraulique pressurisé (40), et lorsque la valve principale (42) est dans le second état, le second circuit hydraulique (55) est connecté au côté haute pression (44) de la source de fluide hydraulique pressurisé (40) pour pousser la seconde partie (12) de la presse à balles (4) de l'état de formation de balle à l'état ouvert, et lorsque la valve principale (42) est dans le troisième état, le second circuit hydraulique (55) est isolé de la source de fluide hydraulique pressurisé (40).

13. Procédé de contrôle de la densité à laquelle une balle ronde de matériau est formée dans une presse à balles (4), la presse à balles (4) comprenant une première partie (10) et une seconde partie (12) pouvant fonctionner dans un état de formation de balle définissant avec la première partie (10) une chambre de balle (18) dans laquelle le matériau est tourné, pressé et formé en une balle ronde, au moins un vérin hydraulique (25) agissant entre les première et seconde parties (10,12) de la presse à balles (4), et un premier circuit hydraulique (50) adapté pour se connecter à un côté haute pression (44) d'une source de fluide hydraulique pressurisé (40) pour appliquer un fluide hydraulique à au moins le vérin hydraulique (25) à une pression d'alimentation pour pousser la seconde partie (12) de la presse à balles (4) dans l'état de formation de balle pour appliquer une force de pression au matériau dans la chambre à balles (18) pour presser la balle à l'intérieur, **caractérisé en ce que** le procédé comprend le couplage d'un circuit de réduction de pression (68) au premier circuit hydraulique (50) par l'intermédiaire d'une valve primaire (70), le fonctionnement de la valve primaire (70) dans un état ouvert pour connecter le circuit de réduction de pression (68) au premier circuit hydraulique (50) afin d'accueillir du fluide hydraulique du premier circuit hydraulique (50) jusqu'au circuit de réduction de pression (68) pour réduire la pression hydraulique dans le premier circuit hydraulique (50) jusqu'à une pression hydraulique sélectionnée parmi une pluralité de pressions hydrauliques sélectionnables pour produire la balle à une densité de balle sélectionnable correspondante en réponse à la pression dans le premier circuit hydraulique (50) étant à la pression d'alimentation ou dépassant la pression hydraulique sélectionnée et le premier circuit hydraulique (50) étant isolé de la source de fluide hydraulique pressurisé (40).

14. Procédé selon la revendication 13, **caractérisé en ce que** la valve primaire (70) est actionnée dans un état fermé pour isoler le premier circuit hydraulique (50) du circuit de réduction de pression (68) en réponse à la pression hydraulique dans le premier circuit hydraulique (50) étant réduite à la pression hydraulique sélectionnée pour produire la balle de la densité de balle sélectionnée correspondante.

15. Procédé selon la revendication 13 ou 14, **caractérisé en ce que** la valve primaire (70) est actionnée dans l'état ouvert pour renvoyer le fluide hydraulique du circuit de réduction de pression (68) vers le premier circuit hydraulique (50) en réponse à un signal indiquant que le fluide hydraulique est renvoyé à travers le premier circuit hydraulique (50) depuis l'au moins un vérin hydraulique (25) vers un côté basse pression (45) de la source de fluide hydraulique pressurisé (40).
